# EUROPEAN PATENT APPLICATION

(11) **EP 4 844 552 A1**
(43) Date of publication of application: **25.11.2026**
(21) Application number: 26178432.6
(22) Date of filing: 13.05.2026
(51) Int. Cl.: G06F 3/0482, H04M 1/72454

(54) **CONTEXTUAL SURFACING OF USER INTERFACE ELEMENTS**

(30) Priority: 19.05.2025 US 202563808604 P; 26.02.2026 US 202619551285
(71) Applicant: Apple Inc., Cupertino, CA 95014 (US)
(72) Inventor: LEONARD, Adam, J., Cupertino, 95014 (US); AGNOLI, Giovanni M., Cupertino, 95014 (US); NIETO, Heriberto, Cupertino, 95014 (US); REYES, Gabriel, Cupertino, 95014 (US); YOUTSEY, Samuel, R., Cupertino, 95014 (US)
(74) Representative: COPA Copenhagen Patents

(57) **Abstract**

Systems and methods provide for generating an alert that provides an option to view a user interface element. Based on sensor data and application data, one or more user interface elements are selected, each user interface element being associated with an application recommending a content and/or action based on the user's current activity and contextual state. A likelihood indicating a relevance of each user interface element with the current user activity is generated. The order of presenting the user interface elements for display is decided based on the likelihood generated for each respective user interface element. If the likelihood of any of the user interface element is more than a pre-specified threshold, an alert is generated for the user.

## Description

### CROSS-REFERENCE TO RELATED APPLICATIONS

The present application claims the benefit of U.S. Provisional Application No. 63/808,604, entitled "CONTEXTUAL SURFACING OF USER INTERFACE ELEMENTS", filed May 19, 2025, which is incorporated herein for reference in its entirety.

### TECHNICAL FIELD

This disclosure relates to determining information relevant to the user and providing the relevant information to the user.

### BACKGROUND

Mobile electronic devices (e.g., watch or smartphone) are popular and are often carried by users while performing daily, and/or recurring, tasks. Users often engage with these electronic devices for accessing locally installed applications. However, due to limited screen size of such electronic devices, only a small amount of information can be displayed at any given time. As a result, if the presented content is not immediately relevant, users may need to perform additional interactions to locate the desired information or applications.

### BRIEF DESCRIPTION OF THE DRAWINGS

Certain features of the subject technology are set forth in the appended claims. However, for the purpose of explanation, several aspects of the subject technology are set forth in the following figures.
FIG. 1 illustrates an example network environment according to aspects of the subject technology.
FIG. 2 illustrates an example computing architecture for a system according to aspects of the subject technology.
FIG. 3 illustrates a flowchart of an example process of determining a display priority of user interface elements according to aspects of the subject technology.
FIG. 4 illustrates a flowchart of an example process of generating an alert for the user to interact with a user inface element.
FIG. 5 illustrates an example electronic system with which aspects of the subject technology may be implemented in accordance with one or more implementations.

The details above in the Brief Description of the Drawings are intended to describe only some aspects relating to certain embodiments of the innovations herein and should not be deemed in any way limiting with respect to requiring or omitting any aspect for embodiments to be claimed or otherwise limiting the disclosure or embodiments keeping with its scope or spirit.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In some implementations, structures and components are shown in block diagram form to avoid obscuring the concepts of the subject technology.

The subject system provides a framework for electronic devices such as smartphones, smartwatches, or other wearable devices to collect data from multiple sources including sensors and/or applications running on the device or external devices to obtain a broader and more detailed view of a user's behavior, activity, and/or the user's environment. The subject system implements a machine learning (ML) model that determines, based on the user's current activity and context, whether particular content and/or suggested actions are currently relevant to the user. Based on the relevance determined for the content and/or suggested actions, the subject system can determine a display order for the UI elements that correspond to the content and/or suggested actions. The display order may prioritize the content and/or suggested actions that were determined to currently be the most relevant to the user and the UI elements may then be presented to the user in accordance with the display order. In this manner, the subject system provides the user with efficient access to relevant content and/or relevant suggested actions thereby eliminating the need for additional user interactions with the electronic device to obtain access to such content and/or suggested actions.

In one or more implementations, when the subject system determines that the relevance of a particular UI element to the user's current activity and/or context satisfies a pre-determined threshold, the subject system may proactively surface the particular UI element and/or may alert/notify the user of the UI element, such as when the user is not presently viewing the device. In other embodiments, the subject system may surface the particular UI element and/or may alert/notify the user of the UI element and automatically perform an action associated with the UI element. For example, if the subject system determines that the relevance of a UI element recommending an action of tracking the workout is more than a prespecified threshold, the subject system can automatically surface the UI element, generate an alert for the user to view the UI element, and/or automatically open the fitness application and start tracking the workout without requiring the user to initiate the tracking process.

The subject system provides personalized, context-aware assistance that improves a user's experience with an electronic device. By continuously collecting and analyzing data from various sources like sensors, applications, and user behavior patterns, the subject system can make timely recommendations that are relevant to the user. For example, if the subject system detects that the user is working out, the subject system can suggest or even automatically launch a fitness application reducing the need for manual interaction. This not only reduces the latency associated with launching the fitness application but also ensures that the user has quick access to the most useful applications and content based on their real time activity..

The subject system may further improve device accessibility by proactively surfacing content and/or suggested actions allowing for a more seamless and intuitive user experience. The proactive surfacing of content and/or suggested actions may be particular useful for users with permanent and/or temporary accessibility constraints, such as a user driving and/or engaging in physical activity.

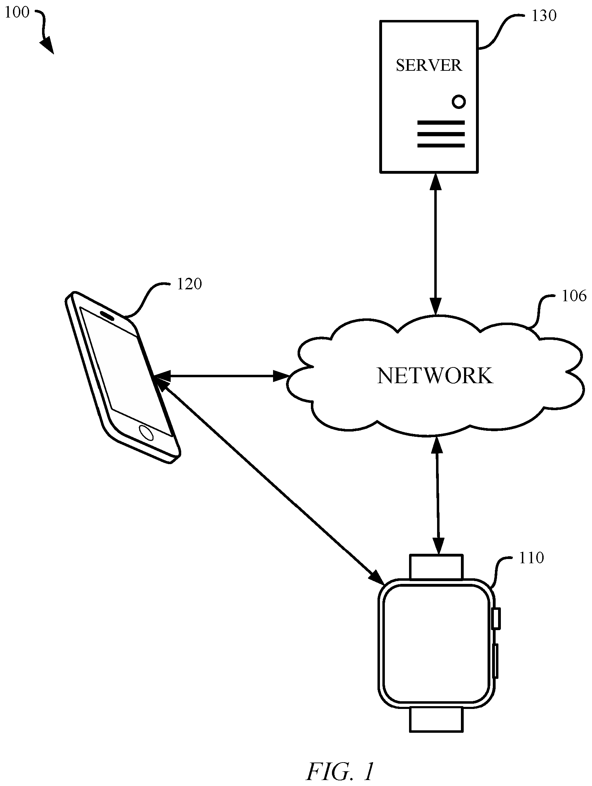

FIG. 1 illustrates an example network environment 100 including an electronic device providing contextual surfacing of user interface elements in accordance with one or more implementations. Not all the depicted components may be used in all implementations, however, and some implementations may include additional or different components than those shown in the figure. Variations in the arrangement and type of the components may be made without departing from the scope of the claims as set forth herein. Additional components, different components, or fewer components may be provided.

The network environment 100 includes a wearable electronic device 110, an electronic device 120, and a server 130. The network 106 may communicatively (directly or indirectly) couple, for example, any two or more of the electronic device 120, the wearable electronic device 110, and/or the server 130. In one or more implementations, the network 106 may be an interconnected network of devices that may include, or may be communicatively coupled to, the Internet. For explanatory purposes, the network environment 100 is illustrated in FIG. 1 as including an electronic device 120, a wearable electronic device 110, and a server 130; however, the network environment 100 may include any number of electronic devices and any number of servers.

The server 130 may be part of a network of computers or a group of servers, such as in a cloud computing or data center implementation. The server 130 may store data, such as photos, music, text, web pages and/or content provided therein, etc., that may be accessible on the wearable electronic device 110 and/or the electronic device 120.

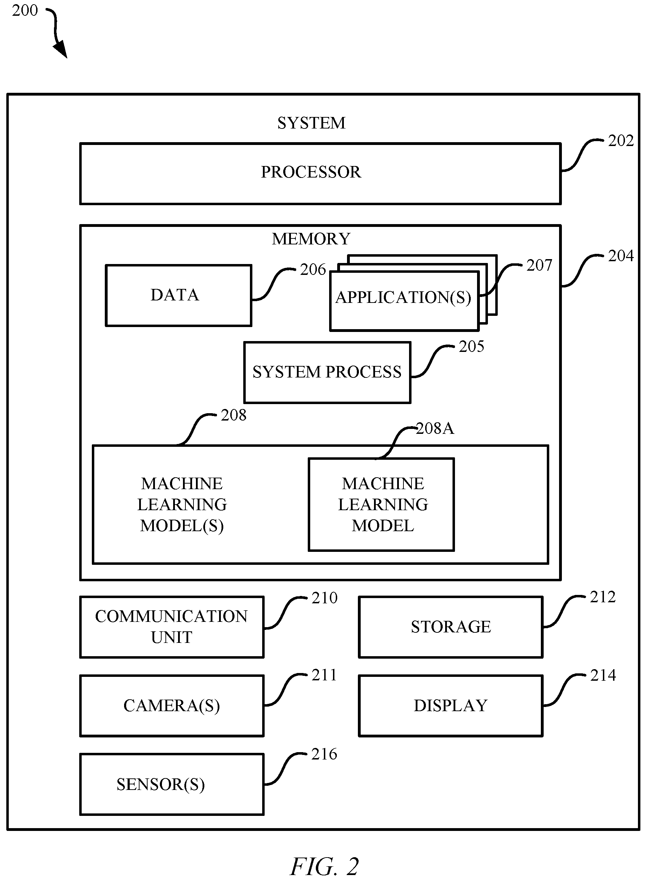

The electronic device 120 may be, for example, a portable computing device such as a laptop computer, a smartphone, a peripheral device (e.g., a digital camera, headphones), a tablet device, a smart speaker, and the like, or any other appropriate device that includes, for example, one or more wireless interfaces, such as WLAN radios, cellular radios, Bluetooth radios, Zigbee radios, near field communication (NFC) radios, and/or other wireless radios. In FIG. 1, by way of example, the electronic device 120 is depicted as a mobile smartphone device. The electronic device 120 may be, and/or may include all or part of, the electronic system discussed below with respect to FIG. 2. The electronic device 120 may communicate with the wearable electronic device 110.

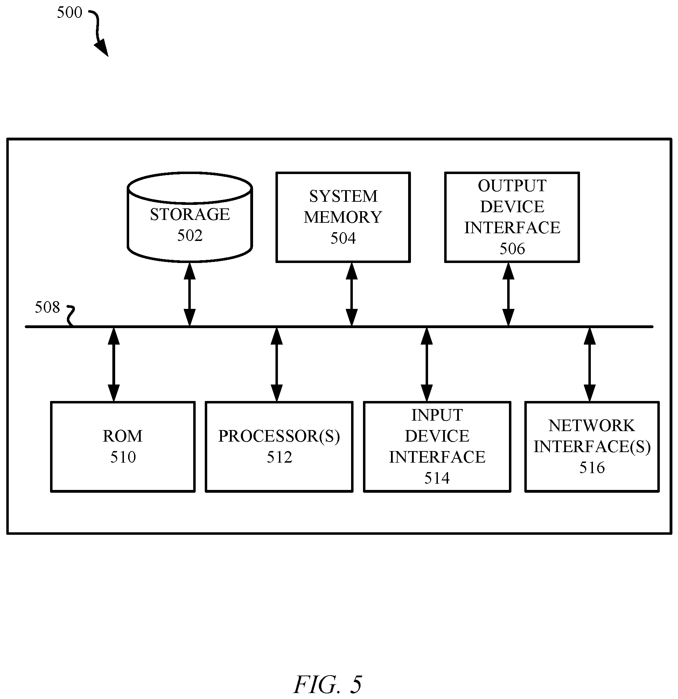

The wearable electronic device 110 may be, for example, a wearable device configured to be worn on a user's arm that includes, for example, one or more wireless interfaces, such as WLAN radios, cellular radios, Bluetooth radios, Zigbee radios, near field communication (NFC) radios, and/or other wireless radios. The wearable electronic device 110 may be, and/or may include all or part of the electronic device discussed below with respect to FIG. 5.

Although the wearable electronic device 110 is illustrated as being capable of communicating with another device or the server 130 using the network 106, in one or more implementations described herein, the wearable electronic device 110 performs operations locally on the device itself to provide relevant data to a user (e.g., without communicating over the network 106 and/or the server 130).

FIG. 2 illustrates an example system 200 in accordance with some implementations of the subject technology. In an example, the system 200 may be implemented in the electronic device 120 or the wearable electronic device 110. In another example, the system 200 may be implemented either in a single device or in a distributed manner across multiple devices.

In an example, the system 200 may include a processor 202, memory 204 (memory device) and a communication unit 210. The memory 204 may store data 206 and one or more machine learning models 208, such as the machine learning model 208A. In an example, the system 200 may include or may be communicatively coupled with a storage 212. Thus, the storage 212 may be either an internal storage or an external storage. In the example of FIG. 2, the system 200 includes one or more camera(s) 211 such as the camera 110A, a display 214, and one or more sensors(s) 216. Sensor(s) 216 may include location sensors (e.g., satellite positioning system sensors), motion sensors (e.g., inertial sensors), and/or depth sensors (e.g., stereo cameras, LIDAR sensors, radar sensors, time-of-flight sensors, or the like), global positioning system (GPS) receiver, electrocardiogram (ECG or EKG) sensors, blood pressure monitors, body temperature, and peripheral oxygen saturation (SpO2) sensors, or the like.

In an example, the system 200 may execute a system process 205 or service that performs core and/or auxiliary functions within the system 200. The system process 205 may perform operations such as sensor data acquisition, real-time processing of inputs from camera(s) or sensor(s) 216, machine learning inferences, communication handling and user interface rendering. The system process 205 is typically managed by an operating system (OS) of the system 200 and is different from one or more applications 207 executing in the system 200. In one or more implementations, the system process 205 may interact with the one or more applications 207 using an application programming interface (API). In one or more implementations, the system process 205 may be an operating system process or daemon.

In an example, the processor 202 may be a single processing unit or multiple processing units. The processor 202 may be implemented as one or more microprocessors, microcomputers, microcontrollers, digital signal processors, central processing units (CPUs), graphics processing units (GPUs), neural processors, specialized processors, e.g., for training and/or evaluating machine learning models, such as large language models, state machines, logic circuitries, and/or any devices that manipulate signals based on operational instructions. Among other capabilities, the processor 202 is configured to fetch and execute computer-readable instructions and data stored in the memory 204.

In an example, the communication unit 210 may include one or more hardware units that support wired or wireless communication between the processor 202 and processors of other computing devices, and/or for communication over a telecommunication network.

The memory 204 may include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

The memory 204 may include one or more applications 207 such as a service, widget, or program that is stored locally and/or running on the system 200 (e.g., wearable electronic device 110 or the electronic device 120). The one or more applications 207 can interact with each other or with an operating system of the system 200 using application programming interfaces (API) to send or receive application data.

The one or more applications 207 can also include respective user interfaces (UI) for display on the display 214 to facilitate user-interaction, enabling the user to provide inputs and receive output seamlessly. The one or more applications 207 can recommend content and/or actions to be presented to the user via one or more UI elements rendered on a display of the system 200 (e.g., wearable electronic device 110 or the electronic device 120). The content may include, for example, notifications, prompts, media, informational summaries, while actions may include, for example, initiating a communication, launching an application, confirming an event, or performing a health related activity. The UI elements used to present such suggestions, may include but are not limited to on screen buttons, banners, popups, list items, tiles, or voice prompts.

The data 206 may represent, amongst other things, a repository of data processed, received, and generated by one or more processors such as the processor 202. One or more of the aforementioned components of the system 200 may send or receive data, for example, using one or more input/output ports and one or more communication units.

In some embodiments, the data 206 can include information generated, processed, or stored by one or more applications 207 executing on the system 200 (e.g., wearable electronic device 110 or electronic device 120). This data may include both static and dynamic information such as application configuration settings, application usage metrics, user generated content, application session metadata, application specific logs, and application activity states. Application data may further include developer marked events indicating key points-of-interest within the applications - e.g., completed goals, milestones, etc. For example, a fitness application may log completed workouts, goals achieved, or calories burned. As for another example, a productivity application may record notes, meetings, or task completions. Application data may also include reference to content accessed within the application (e.g., articles read, music played, or media watched) or profile settings relevant to the application behavior.

In some embodiments, application data may include historical user activity and content related to one or more applications 207. The user activity information can include records of prior actions performed by the user within the applications, capturing how the user interacts with recommended content and/or actions offered by the application. For example, the data may include logs of the user starting or completing a workout in a fitness application, submitting a form, accessing a particular screen or module, or interacting with recommended content and/or actions. The data can further include timestamps and application metadata, such as the device state, the application state, the sensor data, and the UI elements previously used to recommend and/or suggest content and/or actions.

In some embodiments, data 206 may include recent and/or historical contextual data that describes the user's contextual state i.e., the user's environment or routine at a given moment in time. Contextual data may include temporal attributes (e.g., time of day, day of week, season), spatial attributes (e.g., GPS location, movement patterns, location categories - such as home, work or gym) and schedule based attributes (e.g., calendar events such as meetings or reminders). Additionally, contextual data may incorporate device specific states such as battery level, connectivity status, ambient conditions (e.g., light levels or environment noise). In some embodiments, contextual data can be provided by the one or more applications 207 or derived from application data and/or sensor data.

In some embodiments, data 206 may further include sensor data obtained from the one or more sensors 216 of the system 200. Such sensor data may include motion data (e.g., accelerometer or gyroscope data), biometric data (e.g., heart rate, skin temperature), environment data (e.g., ambient light, barometric pressure) or location data (e.g., GPS coordinates, location tags, addresses, pin codes, etc.) The sensor data may be used independently or in combination with application data to provide contextual information about the user's activity, environment, and psychological state.

In some embodiments, the system process 205 can process sensor data, application data and contextual information associated with the user to monitor and analyze user activity. The system process 205 can then recommend content and/or actions to the user via one or more UI elements provided by one or more applications by rendering the UI elements on the display of the system 200 (e.g., the wearable electronic device 110 or the electronic device 120). For example, if the system process 205 determines that that the user is performing a high intensity workout (e.g., based on accelerometer data and elevated heart rate), it may recommend the user to track and log the high intensity workout via a dedicated UI element provided by a fitness application. If the user has been sedentary for extended duration, the system process 205 can prompt the user to take a walking break using a UI element provided by a wellness application. Alternatively, upon detecting a low stress heart rate pattern combined with stillness, a system process 205 can recommend a breathing exercise. In the productivity context, if the sensor and contextual data indicate that the user is attending a meeting (e.g., based on calendar data and GPS location), the system process 205 may suggest enabling the do-not-disturb mode of the electronic device 120 or recommending a note taking application. Each recommended item is delivered through a distinct UI element tailored for the user activity.

In some embodiments, the system process 205 can determine multiple distinct user activities and recommend content and/or actions to the user simultaneously by processing sensor data, application data and contextual information associated with the user. For example, sensor data may include high frequency accelerometer readings with moderate amplitude and sustained elevated heart rate. This sensor data may be interpreted by the system process 205 as indicative of a light intensity cardiovascular activity such as jogging. Accordingly, the system process 205 may recommend the user to track and log a jogging workout session via a dedicated UI element provided by the fitness application. Simultaneously, the system process 205 may also consider the time of day, the user's activity history, and activity duration. Based on the broader context, the system process 205 may classify the same sensor data as a commute on foot rather than a workout if the activity occurs during morning hours of a weekday and following a repeated pattern. In this case, the system process 205 may recommend traffic updates, daily summaries, or upcoming calendar events using a UI element provided by a behavioral analysis application.

The machine learning model(s) 208, in an example, may include one or more of machine learning (ML) based models and artificial intelligence-based models, such as, for example, a first ML model 208A. The ML model 208A can be implemented on the system 200 of the wearable electronic device 110 or the electronic device 120 and can be trained using training data (e.g., application data, sensor data, contextual data, user activity data) to determine a likelihood indicating a relevance of the respective UI element to a user activity. In some embodiments, the ML model 208A can be supervised, semi-supervised, or unsupervised. The ML model 208A may be based on regression learning, reinforcement learning, decision trees, random forest, support vector machines, neural-networks, or any suitable learning algorithms. In some embodiments, the system 200 can use neural network-based ML model 208A for determining the likelihood indicating the relevance of the respective UI element to the user activity. As an example, and not by way of limitation, the neural-network based models may comprise one or more of transformers neural-networks, long-short term memory units, or recurrent neural networks, or any combination thereof.

In some embodiments, the system process 205 can be configured to select one or more UI elements from UI elements provided by, and/or made available by, the one or more applications 207, based on the user's current activity, sensor data and contextual data. The UI elements may correspond to recommended content and/or actions generated by various applications installed on the wearable electronic device 110 or the electronic device 120. The selection process may involve evaluating real-time sensor output, such as motion data, biometric data, and environment conditions in combination with contextual data such as time of the day, location, calendar events and device usage patterns. Using this selection process, the system 200 can select one or more UI elements that exhibit the highest contextual relevance to the user's current state and/or activity. For example, if the sensor data indicates the user is walking outdoors during a scheduled workout period, and contextual data confirms a recurring workout routine during that time and location, the system process may select UI elements from a fitness application - such as a UI element to track and log workout or a UI element to alert the user for post workout hydration. Simultaneously, the system process can deprioritize unrelated UI elements based on the user's current state or activity. The system process 205 may then evaluate the selected one or more UI elements using the ML model 208A to determine the relevance likelihood for each UI element. By implementing such a selection process, the system process can conserve energy of the system 200 while only processing the selected UI elements using the ML model 208A.

In some embodiments, the system process can use a rule-based model instead of, or in conjunction with, the ML model 208A, to determine the relevance likelihood of UI elements provided by the one or more applications 207. In such embodiments, the computation of the relevance likelihood values can be performed using a set of predefined conditions or heuristics based on prior user activity, sensor data, contextual data, and application data. The rule-based model can include a structured collection of conditional statements that evaluate specific data patterns and generate a relevance likelihood (or a score) for the UI elements. For example, if the heart rate is greater than 120 beats per minute (BPM) and accelerometer data shows a rhythmic motion, the system process may assign a high relevance likelihood to the UI element provided by the fitness application suggesting the user to track a workout.

In some embodiments, the system process 205 can train the ML model 208A using a supervised learning framework that leverages multimodal input features including historical sensor data, application data, user activity data, and contextual data. The training process can involve the use of a labeled training data set that includes historical interaction of the user with UI elements associated with previously recommended content and/or actions. Each training sample may contain a composite of data features derived from sensor data (e.g., accelerometer, gyroscope, heart rate, GPS, etc.), application data (e.g., application usage data, developer tagged events, etc.), user activity data (e.g., historical user interactions with UI elements presented to the user or searched by the user) and contextual data (e.g., time of day, day of week, location, calendar events, device usage history, etc.) During training, the ML model 208A is exposed to labeled outcomes indicating whether a specific UI element was presented to the user and whether the user engaged with the UI element - e.g., whether the user tapped, dismissed, ignored the UI element. The labelled outcomes are used by the ML model 208A to calculate a loss value based on a loss function which is then used as a feedback to the ML model 208A to adjust one or more training parameters of the ML model 208A or learning parameters of the training process.

In some embodiments, after training the ML model 208A, the system process 205 can deploy the ML model 208A as part of a daemon process operating in the background. The ML model 208A may be configured to evaluate in real-time or near-real-time, one or more UI elements provided by the one or more applications 207, to determine a relevance likelihood for each respective UI element. In some embodiments, the ML model 208A can be configured to process the recommended content and/or actions associated with each UI element to determine the relevance likelihood. In other embodiments, the ML model 208A can be also configured to process a combination of user's ongoing activity, contextual state, sensor data, UI element (e.g., an identifier of the UI element) or recommended content and/or actions associated with the UI element to determine a relevance likelihood. For example, the system process 205 can derive a set of features from user's ongoing activity, contextual state, sensor data, etc., to determine a relevance likelihood for each UI element with respect to the user's ongoing activity and contextual state. In some embodiments, the system process 205 can generate a feature vector to represent the set of features which is then processed using the ML model 208A to generate the relevance likelihoods.

For example, assume that the accelerometer data indicates periodic motion signals, the GPS data indicates steady displacement, and the heart rate sensor reports elevated heart rate that is consistent with moderate cardiovascular exercise. In this example, the system process 205 may recommend an action to the user to track and log the cardiovascular exercise via a dedicated UI element provided by the fitness application. Simultaneously, the system process 205 may also suggest a music playlist for the user to listen to while performing the cardiovascular exercise using a UI element provided by a media application. Similarly, the system process 205 can also recommend a motivational quote for the user to listen. In this example, the system process 205 utilizes the ML model 208A to compute the relevance likelihood of each UI element by processing the set of features derived from the current sensor data, and current user activity and the respective UI element.

Continuing with example described above, the ML model 208A may generate a higher relevance likelihood for the UI element provided by the fitness application, if the user has frequently responded to similar recommendations during previous workout sessions. In contrast, if the user has rarely interacted with music playlists suggested while the user is working out, the ML model 208A may generate a comparatively lower relevance likelihood for the UI element provided by the music application. Similarly, if the user has a history of disregarding wellness messages during workout sessions, the ML model 208A may generate an even lower relevance likelihood for the UI element generated by the wellness application.

In some embodiments, the system process 205 can present the UI elements provided by the one or more applications 207 for display on the wearable electronic device 110 or the electronic device 120 in the form of a prioritized stack. Within this stack, the UI elements having relatively higher relevance likelihood - generated by the ML model 208A - are positioned closer to the top of the stack, thereby receiving visual precedence in the UI of the wearable electronic device 110 or the electronic device 120. In some embodiments, the system process 205 may continuously or periodically process the current sensor data, application data, the ongoing user activity data and the UI elements using the ML model 208A to dynamically compute and update the relevance likelihood values corresponding to each UI element. As a result, the system process 205 can update or reshuffle in real time, the ordering of UI elements within the stack. For example, UI elements with increased contextual relevance can be promoted to the top of the stack and UI elements with lower relevance being demoted or deprioritized in the stack. In some embodiments, the stack can only include a subset of the one or more UI elements since the system process 205 can add UI elements associated with contextually relevant recommendations of content and/or actions. Similarly, the system process 205 can remove UI elements associated with contextually irrelevant recommendations of content and/or actions.

In some embodiments, the system process 205 can use the ML model 208A to generate the relevance likelihood for each UI element and determine the corresponding display priority of the UI elements provided by one or more applications 207. The system process 205 of the electronic device 120 can continuously or periodically process the user's ongoing activity, contextual state, sensor data and the UI elements, using the ML model 208A to dynamically compute and update the relevance likelihood values corresponding to each UI element. Based on the determined relevance likelihoods, the system process may generate a ranked list of UI elements, wherein the UI elements with higher relevance likelihood values are positioned at the top of the stack indicating a higher display priority.

In some embodiments, if the system process 205 of the electronic device 120 determines the relevance likelihood of UI elements and generates the ranked list of UI elements, the system process 205 can use this ranked list to generate a data structure to recommend an ordered set of one or more UI elements to the connected wearable electronic device 110.

In some embodiments, the system process 205 can perform the computation of relevance likelihood for each UI element and perform ranking of the UI elements to generate the data structure at regular intervals (e.g., periodically based on a predefined schedule.) In other embodiments, the system process 205 can be triggered by specific events associated with the user activity. The triggering events may include a detection of a significant change in sensor signals (e.g., movement patterns, heart rate variability, GPS location, battery levels) or transitions in user activity (e.g., from stationary to walking or from resting to exercise). Upon detecting such a change, the system process 205 may re-evaluate the user's ongoing activity, contextual state, sensor data and the UI elements, using the ML model 208A to recalculate the relevance likelihood of each UI element.

In some embodiments, if the relevance likelihood associated with a particular UI element, as determined by the system process 205 using the ML model 208A, exceeds a first predetermined threshold value, the system process 205 can determine a strong contextual alignment of the user's current activity and contextual state with the particular UI element. In response, the system process can generate an alert to notify the user of the recommended content and/or action associated with the particular UI element. The alert may be rendered through various modalities depending on the features and configurations of the wearable electronic device 110 or the electronic device 120. For example, the alert may be presented as a visual notification banner on the display of the wearable electronic device 110, tactical feedback such as a vibration pulse, or an auditory response in the form of a tone or spoken prompt. In some embodiments, the alert may also appear as a persistent overlay UI element on the display until the user acknowledges or interacts with the overlay UI element. In one or more implementations, the overlay UI element may include all or part of the particular UI element.

For example, consider a scenario where a system process 205 detects that the user has completed a high intensity physical activity session. The determination can be based on accelerometer data indicating rhythmic motion, heart rate exceeding a predefined threshold, and GPS data confirming spatial displacement, contextual data, and the user's historical activities. Based on this determination, the system process 205 can use the ML model 208A to generate a high relevance likelihood for a UI element provided by the fitness application, recommending a hydration reminder. If the computed relevance likelihood exceeds a first predefined threshold, the system process 205 can generate an alert on the wearable electronic device 110 to notify the user of the recommendation. The alert can include a persistent UI element that reads for example "Great run! don't forget to hydrate." The UI element can also include a tap UI element allowing the user to log water intake or access post workout tips or workout statistics.

In some embodiments, if the relevance likelihood associated with a particular UI element, as determined by the system process 205 using the ML model 208A, exceeds a second predetermined threshold value, the system process 205 may autonomously initiate execution of the recommended application or an action associated with a UI element, without requiring explicit user input. For example, the system process 205 can detect, track, and log a workout session performed by the user based on the real time sensor data collected by the wearable electronic device under 110. The system process 205 may identify the initiation of the workout session by detecting a distinct change in motion patterns captured by the accelerometer and gyroscopic sensors - e.g., onset of rhythmic, high intensity movement combined with biometric data indicating a sustained increase in heart rate and body temperature. In response, the system process 205 can recommend a UI element provided by the fitness application to detect, track, and log the workout session. Upon detecting such a change, the system process 205 may re-evaluate the user's ongoing activity, contextual state, sensor data and the UI elements using the ML model 208A to recalculate the relevance likelihood of the UI element. If the computed relevance likelihood exceeds the second predefined threshold, the system process 205 can autonomously start the tracking feature of the fitness application without requiring explicit user input. Continuing with the example described above, upon determining cessation of workout session, e.g., sensor data indicating return to baseline motion and heart rate, the system process 205 can terminate the fitness tracking and log the workout automatically.

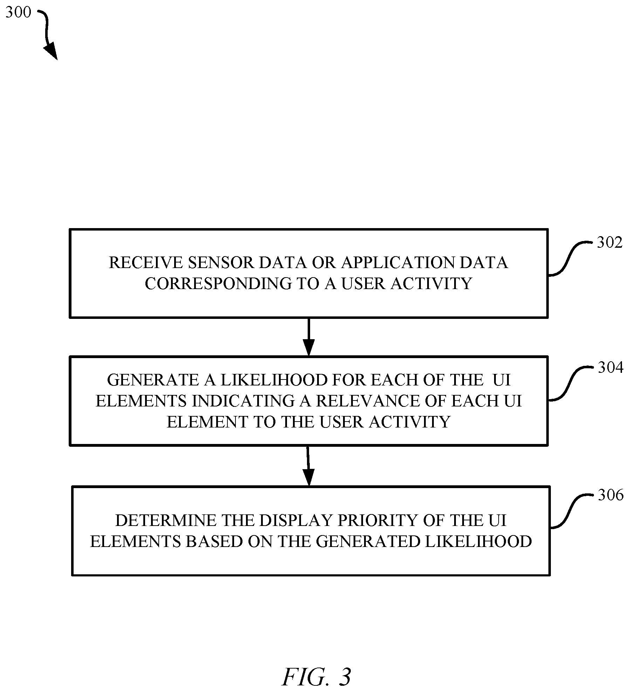

FIG. 3 is a flowchart illustrating an example process 300 for determining a display priority of UI elements. For explanatory purposes, the process 300 is primarily described herein with reference to the wearable electronic device 110 and electronic device 120 of FIG. 1. However, the process 300 is not limited to the wearable electronic device 110 and electronic device 120 of FIG. 1, and one or more blocks (or operations) of the process 300 may be performed by one or more other suitable devices. Further for explanatory purposes, the blocks of the process 300 are described herein as occurring in serial, or linearly. However, multiple blocks of the process 300 may occur in parallel. In addition, the blocks of the process 300 need not be performed in the order shown and/or one or more blocks of the process 300 need not be performed and/or can be replaced by other operations.

At block 302, the system process 205 receives the user's ongoing activity, sensor data and contextual state and one or more UI elements. For example, the system process 205 may receive accelerometer data that indicates periodic motion signals, GPS data that indicates steady displacement, and heart rate sensor that indicates elevated heart rate that is consistent with moderate cardiovascular exercise. In response, the system process 205 may recommend an action to the user to track and log the cardiovascular exercise using a UI element provided by a fitness application. Simultaneously, the system process 205 may suggest a music playlist for the user to listen to while performing the cardiovascular exercise and can also recommend a motivational quote for the user to listen. Each of these recommendations are associated with a respective UI element provided by the respective applications.

At block 304, the system process 205 uses the ML model 208A to generate a relevance likelihood for each of the one or more UI elements. For example, the system process 205 can use the ML model 208A to evaluate in real-time or near-real-time each of the one or more UI elements provided by the fitness application, the music application, and the wellness application to determine a relevance likelihood for the UI elements provided by each respective application. The ML model 208A can be configured to process each UI element (or the recommended content and/or actions associated with each UI element) iteratively and the contextual state of the user to determine a relevance likelihood for each respective UI element. The ML model 208A can be also configured to process a combination of user's ongoing activity, contextual state, sensor data, UI elements or recommended content and/or actions associated with each UI element to determine a relevance likelihood for each respective UI element. For example, the system process 205 can derive a set of features from user's ongoing activity, contextual state, sensor data, UI elements or recommended content and/or actions associated with each UI element to determine a relevance likelihood for each UI element with respect to the user's ongoing activity and contextual state. In the example described above, the ML model 208A may generate a higher relevance likelihood for the UI element provided by the fitness application, if the user has frequently responded to similar recommendations during previous workout sessions. In contrast, if the user has rarely interacted with music playlists suggested while the user is working out, the ML model 208A may generate a comparatively lower relevance likelihood for the UI element provided by the music application. Similarly, if the user has a history of disregarding wellness messages during workout sessions, the ML model 208A may generate an even lower relevance likelihood for the UI element generated by the wellness application.

At block 306, the system process 205 can determine a display priority based on generated relevance likelihood. For example, the UI elements associated with the recommended content and/or actions are presented for display on the wearable electronic device 110 or the electronic device 120 in the form of a prioritized stack. Within this stack, the UI elements having relatively higher relevance likelihood - computed by the ML model 208A - are positioned closer to the top of the stack, thereby receiving visual precedence in the UI of the wearable electronic device 110 or the electronic device 120. The system process 205 may continuously or periodically process the current sensor data, the application data, the ongoing user activity data, and the UI elements using the ML model 208A to dynamically compute and update the relevance likelihood values corresponding to each UI element. As a result, the system process 205 can update or reshuffle in real time, the ordering of UI elements within the stack. For example, UI elements with higher relevance likelihood indicating increased contextual relevance can be promoted to the top of the stack and UI elements with lower relevance likelihood indicating a declining relevance being demoted or deprioritized in the stack. For example, if the ML model 208A generates a higher relevance likelihood for the UI element provided by the fitness application, the system process 205 can move the UI element provided by the fitness application to the top of the stack.

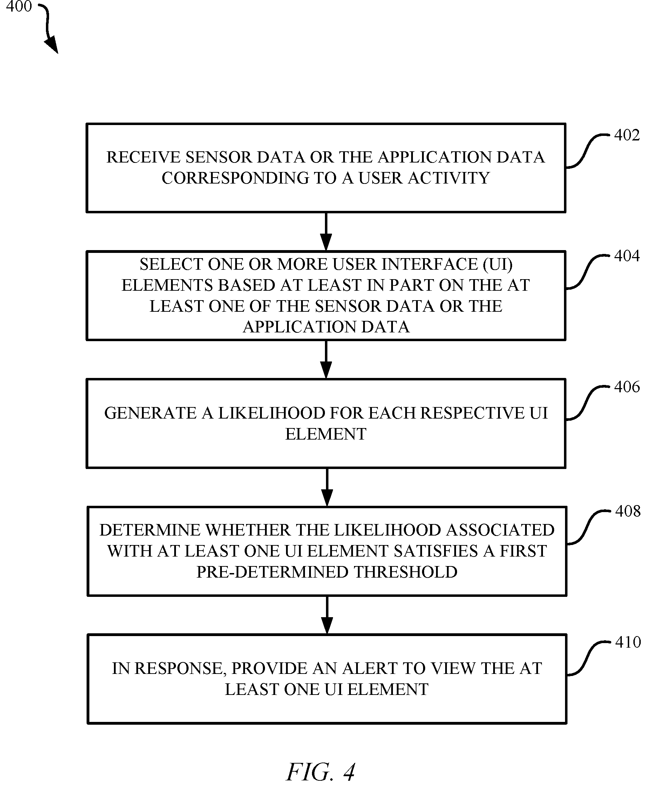

FIG. 4 is a flowchart illustrating an example process 400 for generating an alert for the user to view a UI element. For explanatory purposes, the process 400 is primarily described herein with reference to the wearable electronic device 110 and electronic device 120 of FIG. 1. However, the process 400 is not limited to the wearable electronic device 110 and electronic device 120 of FIG. 1, and one or more blocks (or operations) of the process 400 may be performed by one or more other suitable devices. Further for explanatory purposes, the blocks of the process 400 are described herein as occurring in serial, or linearly. However, multiple blocks of the process 400 may occur in parallel. In addition, the blocks of the process 400 need not be performed in the order shown and/or one or more blocks of the process 400 need not be performed and/or can be replaced by other operations.

At block 402, the system process 205 receives sensor data or the application data corresponding to a user activity. For example, the system process 205 may receive accelerometer data that indicates periodic motion signals, GPS data that indicates steady displacement, and heart rate sensor that indicates elevated heart rate that is consistent with moderate cardiovascular exercise.

At block 404, the system process 205 can select one or more user interface (UI) elements based at least in part on the at least one of the sensor data or the application data. For example, the system process 205 can be configured to select one or more UI elements provided by the one or more applications 207 based on the sensor data and contextual data associated with the user. The UI elements may correspond to recommended content and/or actions generated by various applications executing on the wearable electronic device 110 or the electronic device 120. The selection process may involve evaluating real-time sensor output, such as motion data, biometric data, and environment conditions in combination with contextual data such as time of the day, location, calendar events and device usage patterns. Based on the selection process, the system process 205 can select the one or more UI elements that exhibit the highest contextual relevance to the user's current state or activity. For example, if the sensor data indicates the user is walking outdoors during a scheduled workout period, and contextual data confirms a recurring workout routine during the same time and location, the system process 205 may select UI elements from a fitness application - such as a UI element to track and log workout or a UI element to alert the user for post workout hydration. Simultaneously, the system process 205 can deprioritize UI elements that are contextually irrelevant based on the user's current state or activity. The system process 205 can then evaluate the selected one or more UI elements using the ML model 208A to determine the relevance likelihood for each UI element.

At block 406, the system process 205 generates a relevance likelihood of each UI element of the one or more UI elements. For example, the system process 205 can deploy the ML model 208A as a daemon process operating in the background. The ML model 208A may be configured to evaluate in real-time or near-real-time each of the one or more UI elements to determine a relevance likelihood for each respective UI element. For example, assume that the accelerometer data indicates periodic motion signals, the GPS data indicates steady displacement, and the heart rate sensor reports elevated heart rate that is consistent with moderate cardiovascular exercise. In response, the system process 205 can recommend an action via a UI element provided by the fitness application to the user to track and log the cardiovascular exercise. The system process 205 can derive a set of features from a combination of user's ongoing activity, contextual state, sensor data, UI elements or recommended content and/or actions associated with the UI element from the fitness application. The system process 205 can process the set of features using the ML model 208A to generate a relevance likelihood for the UI element provided by the fitness application. Likewise, the system process 205 generates a relevance likelihood for each UI element of the one or more UI elements.

At block 408, the system process 205 determines whether the relevance likelihood associated with at least one UI element satisfies a first pre-determined threshold. For example, the system process 205 can determine whether the relevance likelihood associated with a particular UI element, as determined by the system process 205 using the ML model 208A, exceeds a first predetermined threshold value indicating a strong contextual alignment of the user's current user activity and contextual state with the particular UI element.

At block 410, the system process 205 provides an alert to notify the user of at least one UI element. For example, in response to determining that the relevance likelihood associated with a particular UI element exceeds the first predetermined threshold, the system process 205 can generate an alert to notify the user of the recommended content and/or action associated with the particular UI element. The alert may be rendered through various modalities depending on the features and configurations of the wearable electronic device 110 or the electronic device 120. For example, the alert may be presented as a visual notification banner on the display of the wearable electronic device 110, tactical feedback which as a vibration pulse, or an auditory response in the form of a tone or spoken prompt. In some cases, the alert may also appear as a persistent overlay UI element on the display until the user acknowledges or interacts with the overlay UI element.

For example, consider a scenario in which a system process 205 detects that the user has completed a high intensity physical activity session. The determination can be based on accelerometer data indicating rhythmic motion, heart rate data exceeding a predefined exertion threshold, and GPS data confirming spatial displacement over a fixed distance, contextual data-such as time of the day, location, and the user's historical activities. Based on this determination, the system process 205 can use the ML model 208A to generate a high relevance likelihood for a UI element recommending hydration reminder by the fitness application. If the computed relevance likelihood exceeds a first predefined threshold, the system process 205 can generate an alert on the wearable electronic device 110 to notify the user of the recommendation. The alert can include a persistent UI element that reads for example "Great run! don't forget to hydrate." The UI element can also include a tap UI element allowing the user to log water intake or access post run recovery tips.

FIG. 5 illustrates an electronic system 500 with which one or more implementations of the subject technology may be implemented. The electronic system 500 can be, and/or can be a part of, the electronic device 120 and/or the wearable electronic device 110 shown in FIG. 1. The electronic system 500 may include various types of computer readable media and interfaces for various other types of computer readable media. The electronic system 500 includes a bus 508, one or more processing unit(s) 512, a system memory 504 (and/or buffer), a ROM 510, a permanent storage device 502, an input device interface 514, an output device interface 06, and one or more network interfaces 516, or subsets and variations thereof.

The bus 508 collectively represents all system, peripheral, and chipset buses that communicatively connect the numerous internal devices of the electronic system 500. In one or more implementations, the bus 508 communicatively connects the one or more processing unit(s) 512 with the ROM 510, the system memory 504, and the permanent storage device 502. From these various memory units, the one or more processing unit(s) 512 retrieves instructions to execute and data to process in order to execute the processes of the subject disclosure. The one or more processing unit(s) 512 can be a single processor or a multi-core processor in different implementations.

The ROM 510 stores static data and instructions that are needed by the one or more processing unit(s) 512 and other modules of the electronic system 500. The permanent storage device 502, on the other hand, may be a read-and-write memory device. The permanent storage device 502 may be a non-volatile memory unit that stores instructions and data even when the electronic system 500 is off. In one or more implementations, a mass-storage device (such as a magnetic or optical disk and its corresponding disk drive) may be used as the permanent storage device 502.

In one or more implementations, a removable storage device (such as a floppy disk, flash drive, and its corresponding disk drive) may be used as the permanent storage device 502. Like the permanent storage device 502, the system memory 504 may be a read-and-write memory device. However, unlike the permanent storage device 502, the system memory 504 may be a volatile read-and-write memory, such as random-access memory. The system memory 504 may store any of the instructions and data that one or more processing unit(s) 512 may need at runtime. In one or more implementations, the processes of the subject disclosure are stored in the system memory 504, the permanent storage device 502, and/or the ROM 510. From these various memory units, the one or more processing unit(s) 512 retrieves instructions to execute and data to process in order to execute the processes of one or more implementations.

The bus 508 also connects to the input and output device interfaces 514 and 506. The input device interface 514 enables a user to communicate information and select commands to the electronic system 500. Input devices that may be used with the input device interface 514 may include, for example, alphanumeric keyboards and pointing devices (also called "cursor control devices"). The output device interface 506 may enable, for example, the display of images generated by electronic system 500. Output devices that may be used with the output device interface 506 may include, for example, printers and display devices, such as a liquid crystal display (LCD), a light emitting diode (LED) display, an organic light emitting diode (OLED) display, a flexible display, a flat panel display, a solid-state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 5, the bus 508 also couples the electronic system 500 to one or more networks and/or to one or more network nodes, such as the wearable electronic device 110 or the electronic device 120 shown in FIG. 1, through the one or more network interface(s) 516. In this manner, the electronic system 500 can be a part of a network of computers (such as a LAN, a wide area network ("WAN"), or an Intranet, or a network of networks, such as the Internet. Any or all components of the electronic system 500 can be used in conjunction with the subject disclosure.

Implementations within the scope of the present disclosure can be partially or entirely realized as computer program products comprising code in a tangible computer-readable storage medium (or multiple tangible computer-readable storage media of one or more types) encoding one or more instructions of the code. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or segmented in a different way) all without departing from the scope of the subject technology.

Aspects of the present technology may include the gathering and use of data available from specific and legitimate sources to train machine learning models and to apply to trained machine learning models deployed in systems. The present disclosure contemplates that in some instances, this gathered data may include personal information data that uniquely identifies or can be used to identify a specific person. Such personal information data can include meta-data or other data associated with images that may include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used to train a machine learning model for better performance. Accordingly, use of such personal information data enables users to have greater control of the delivered content. Further, other uses for personal information data that benefit the user are also contemplated by the present disclosure.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are recognized as meeting or exceeding industry or governmental requirements for maintaining the privacy of users. Such information regarding the use of personal data should be prominently and easily accessible by users and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of training data collection, the present technology can be configured to allow users to select to "opt in" or "opt out" of participation in the collection of personal information data during registration for services or anytime thereafter. In another example, users can select not to provide mood-associated data for use as training data. In yet another example, users can select to limit the length of time mood-associated data is maintained or entirely block the development of a baseline mood profile. In addition to providing "opt in" and "opt out" options, the present disclosure contemplates providing notifications relating to the access or use of personal information. For instance, a user may be notified upon downloading an application that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, training data can be selected based on aggregated non-personal information data or a bare minimum amount of personal information, such as the content being handled only on the user's device or other non-personal information available to as training data.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can be integrated together in a single software product or packaged into multiple software products.

As used in this specification and any claims of this application, the terms "base station," "receiver," "computer," "server," "processor," and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to," "operable to," and "programmed to" do not imply any particular tangible or intangible modification of a subject, but, rather, are intended to be used interchangeably. In one or more implementations, a processor configured to monitor and control an operation, or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration." Any embodiment described herein as "exemplary" or as an "example" is not necessarily to be construed as preferred or advantageous over other implementations. Furthermore, to the extent that the term "include," "have," or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

Exemplary embodiments of the present disclosure are set out in the following items:
1. A computer-implemented method, comprising:
   receiving, by an electronic device, at least one of sensor data from one or more sensors of the electronic device or application data from one or more applications on the electronic device, the at least one of the sensor data or the application data corresponding to a user activity;
   selecting, by the electronic device, one or more user interface (UI) elements based at least in part on the at least one of the sensor data or the application data;
   generating, by the electronic device, a likelihood for each respective UI element based at least in part on at least one of the sensor data or the application data, the likelihood indicating a relevance of the respective UI element to the user activity;
   determining, whether the likelihood associated with at least one UI element satisfies a first pre-determined threshold; and
   in response to determining that the likelihood associated with the at least one UI element satisfies the first pre-determined threshold, providing, by the electronic device and to a user, an alert that provides an option to view the at least one UI element.
2. The computer-implemented method of item 1, further comprises:
   determining, whether the likelihood associated with the at least one UI element satisfies a second pre-determined threshold; and
   in response to determining that the likelihood associated with the at least one UI element satisfies the second pre-determined threshold, executing, by the electronic device, an application associated with the at least one UI element.
3. The computer-implemented method of any one of items 1-2, wherein generating the alert associated with the at least one UI element comprises displaying the UI element on the electronic device.
4. The computer-implemented method of any one of items 1-3, wherein generating the alert associated with the at least one UI element comprises a haptic notification by the electronic device.
5. The computer-implemented method of any one of items 1-4, wherein generating the alert associated with the at least one UI element comprises:
   transmitting, by the electronic device, an alert notification to a second electronic device;
   displaying, by the second electronic device, another UI element associated the at least one UI element.
6. The computer-implemented method of any one of items 1-5, wherein generating the likelihood for each respective UI element comprises processing the at least one of the sensor data or the application data using a machine learning (ML) model, the ML model having been trained process sensor data and application data to generate a likelihood for a UI element.
7. The computer-implemented method of item 6, wherein the ML model is a neural network model.
8. The computer-implemented method of any one of items 6-7, wherein generating the likelihood for each respective UI element comprises generating the likelihood using a rule based model.
9. The computer-implemented method of any one of items 1-8, wherein generating the likelihood for each respective UI element further comprises:
   ranking the one or more UI elements based in part on the respective likelihoods;
   generating a recommendation of the one or more UI elements based in part on the ranking of the one or more UI elements.
10. The computer-implemented method of item 9, wherein the recommendation of the one or more UI elements determines a display priority of the one or more UI elements on the electronic device.
11. A non-transitory machine-readable medium comprising instructions that, when executed by one or more processors, cause the one or more processors to perform operations comprising:
   receiving, by an electronic device, at least one of sensor data from one or more sensors of the electronic device or application data from one or more applications on the electronic device, the at least one of the sensor data or the application data corresponding to a user activity;
   selecting, by the electronic device, one or more user interface (UI) elements based at least in part on the at least one of the sensor data or the application data;
   generating, by the electronic device, a likelihood for each respective UI element based at least in part on at least one of the sensor data or the application data, the likelihood indicating a relevance of the respective UI element to the user activity;
   determining, whether the likelihood associated with at least one UI element satisfies a first pre-determined threshold; and
   in response to determining that the likelihood associated with the at least one UI element satisfies the first pre-determined threshold, providing, by the electronic device and to a user, an alert that provides an option to view the at least one UI element.
12. The non-transitory machine-readable medium of item 11, further comprises:
   determining, whether the likelihood associated with the at least one UI element satisfies a second pre-determined threshold; and
   in response to determining that the likelihood associated with the at least one UI element satisfies the second pre-determined threshold, executing, by the electronic device, an application associated with the at least one UI element.
13. The non-transitory machine-readable medium of any one of items 11-12, wherein generating the alert associated with the at least one UI element comprises displaying the UI element on the electronic device.
14. The non-transitory machine-readable medium of any one of items 11-13, wherein generating the alert associated with the at least one UI element comprises a haptic notification by the electronic device.
15. The non-transitory machine-readable medium of any one of items 11-14, wherein generating the alert associated with the at least one UI element comprises:
   transmitting, by the electronic device, an alert notification to a second electronic device;
   displaying, by the second electronic device, another UI element associated the at least one UI element.
16. The non-transitory machine-readable medium of any one of items 11-15, wherein generating the likelihood for each respective UI element comprises processing the at least one of the sensor data or the application data using a machine learning (ML) model, the ML model having been trained process sensor data and application data to generate a likelihood for a UI element.
17. The non-transitory machine-readable medium of item 16, wherein the ML model is a neural network model.
18. The non-transitory machine-readable medium of any one of items 11-16, wherein generating the likelihood for each respective UI element further comprises:
   ranking the one or more UI elements based in part on the respective likelihoods;
   generating a recommendation of the one or more UI elements based in part on the ranking of the one or more UI elements.
19. The non-transitory machine-readable medium of item 18, wherein the recommendation of the one or more UI elements determines a display priority of the one or more UI elements on the electronic device.
20. A device comprising:
   a memory; and
   at least one processor configured to:
      receive at least one of sensor data from one or more sensors of an electronic device or application data from one or more applications on the electronic device, the at least one of the sensor data or the application data corresponding to a user activity;
      select one or more user interface (UI) elements based at least in part on the at least one of the sensor data or the application data;
      generate a likelihood for each respective UI element based at least in part on at least one of the sensor data or the application data, the likelihood indicating a relevance of the respective UI element to the user activity;
      determine whether the likelihood associated with at least one UI element satisfies a first pre-determined threshold; and
      in response to determining that the likelihood associated with the at least one UI element satisfies the first pre-determined threshold, provide an alert that provides an option to view the at least one UI element.

## Claims

1. A computer-implemented method, comprising:
receiving, by an electronic device, at least one of sensor data from one or more sensors of the electronic device or application data from one or more applications on the electronic device, the at least one of the sensor data or the application data corresponding to a user activity;
selecting, by the electronic device, one or more user interface (UI) elements based at least in part on the at least one of the sensor data or the application data;
generating, by the electronic device, a likelihood for each respective UI element based at least in part on at least one of the sensor data or the application data, the likelihood indicating a relevance of the respective UI element to the user activity;
determining, whether the likelihood associated with at least one UI element satisfies a first pre-determined threshold; and
in response to determining that the likelihood associated with the at least one UI element satisfies the first pre-determined threshold, providing, by the electronic device and to a user, an alert that provides an option to view the at least one UI element.

2. The computer-implemented method of claim 1, further comprises:
determining, whether the likelihood associated with the at least one UI element satisfies a second pre-determined threshold; and
in response to determining that the likelihood associated with the at least one UI element satisfies the second pre-determined threshold, executing, by the electronic device, an application associated with the at least one UI element.

3. The computer-implemented method of any one of claims 1 or 2, wherein providing the alert associated with the at least one UI element comprises displaying the UI element on the electronic device.

4. The computer-implemented method of any one of claims 1-3, wherein providing the alert associated with the at least one UI element comprises a haptic notification by the electronic device.

5. The computer-implemented method of any one of claims 1-4, wherein providing the alert associated with the at least one UI element comprises:
transmitting, by the electronic device, an alert notification to a second electronic device;
displaying, by the second electronic device, another UI element associated the at least one UI element.

6. The computer-implemented method of any one of claims 1-5, wherein generating the likelihood for each respective UI element comprises processing the at least one of the sensor data or the application data using a machine learning (ML) model, the ML model having been trained process sensor data and application data to generate a likelihood for a UI element.

7. The computer-implemented method of any one of claims 6-7, wherein the ML model is a neural network model.

8. The computer-implemented method of any one claim 6, wherein generating the likelihood for each respective UI element comprises generating the likelihood using a rule based model.

9. The computer-implemented method of any one of claims 1-8, wherein generating the likelihood for each respective UI element further comprises:
ranking the one or more UI elements based in part on the respective likelihoods;
generating a recommendation of the one or more UI elements based in part on the ranking of the one or more UI elements.

10. The computer-implemented method of claim 9, wherein the recommendation of the one or more UI elements determines a display priority of the one or more UI elements on the electronic device.

11. A non-transitory machine-readable medium comprising instructions that, when executed by one or more processors, cause the one or more processors to perform operations comprising:
receiving, by an electronic device, at least one of sensor data from one or more sensors of the electronic device or application data from one or more applications on the electronic device, the at least one of the sensor data or the application data corresponding to a user activity;
selecting, by the electronic device, one or more user interface (UI) elements based at least in part on the at least one of the sensor data or the application data;
generating, by the electronic device, a likelihood for each respective UI element based at least in part on at least one of the sensor data or the application data, the likelihood indicating a relevance of the respective UI element to the user activity;
determining, whether the likelihood associated with at least one UI element satisfies a first pre-determined threshold; and
in response to determining that the likelihood associated with the at least one UI element satisfies the first pre-determined threshold, providing, by the electronic device and to a user, an alert that provides an option to view the at least one UI element.

12. The non-transitory machine-readable medium of claim 11, wherein providing the alert associated with the at least one UI element comprises at least one of displaying the UI element on the electronic device or providing a haptic notification by the electronic device.

13. The non-transitory machine-readable medium of any one of claims 11 or 12, wherein generating the likelihood for each respective UI element comprises processing the at least one of the sensor data or the application data using a machine learning (ML) model, the ML model having been trained process sensor data and application data to generate a likelihood for a UI element, wherein the ML model is a neural network model.

14. The non-transitory machine-readable medium of any one of claims 11-13, wherein generating the likelihood for each respective UI element further comprises:
ranking the one or more UI elements based in part on the respective likelihoods;
generating a recommendation of the one or more UI elements based in part on the ranking of the one or more UI elements, wherein the recommendation of the one or more UI elements determines a display priority of the one or more UI elements on the electronic device.

15. A device comprising:
a memory; and
at least one processor configured to perform the method of any one of claims 1-10.
